# EUROPÄISCHE PATENTSCHRIFT

(11) **EP 1 372 827 B1**
(45) Veröffentlichungstag und Bekanntmachung des Hinweises auf die Patenterteilung: **24.05.2006**
(21) Anmeldenummer: 02727362.2
(22) Anmeldetag: 06.03.2002
(51) Int. Cl.: B01D 53/86, B01J 29/46

(54) **VERFAHREN ZUR VERRINGERUNG DES N2O-GEHALTS IN GASEN**
METHOD OF REDUCING THE N2O CONTENT OF GASES
PROCÉDÉ DE RÉDUCTION DE LA TENEUR EN N2O DE GAZ

(30) Priorität: 13.03.2001 DE 10112396
(43) Veröffentlichungstag der Anmeldung: 02.01.2004
(73) Patentinhaber: Uhde GmbH, 44141 Dortmund (DE)
(72) Erfinder: SCHWEFER, Meinhard, 59872 Meschede (DE); MOTZ, Joachim, 65779 Kelkheim (DE); GEHLEN, Carsten, 45772 Marl (DE)
(74) Vertreter: Ackermann, Joachim
(86) Internationale Anmeldenummer: PCT/EP2002/002436
(87) Internationale Veröffentlichungsnummer: WO 2002/072244

(56) Entgegenhaltungen:
- EP-A- 0 955 080
- US-A- 5 482 692
- US-A- 5 672 777
- RIBERA ET AL.: "Preparation, Characterization, and Performance of FeZSM-5 for the Selective Oxidation of Benzene to Phenol with N2O" J.CATAL., Bd. 195, Oktober 2000 (2000-10), Seiten 287-297, XP002213224 in der Anmeldung erwähnt
- KOEGEL M ET AL: "SIMULTANEOUS CATALYTIC REMOVAL OF NO AND N2O USING FE-MFI" JOURNAL OF CATALYSIS, ACADEMIC PRESS, DULUTH, MN, US, Bd. 182, 1999, Seiten 470-478, XP000996158 ISSN: 0021-9517
- MONTES DE CORREA ET AL.: "Decomposition of nitrous oxide in excess oxygen over Co- and Cu-exchanged MFI zeolites" CATALYSIS LETTERS, Bd. 38, 1996, Seiten 27-32, XP002213225 in der Anmeldung erwähnt
- RAUSCHER M ET AL: "Preparation of a highly active Fe-ZSM-5 catalyst through solid-state ion exchange for the catalytic decomposition of N2O" APPLIED CATALYSIS A: GENERAL, ELSEVIER SCIENCE, AMSTERDAM, NL, Bd. 184, Nr. 2, 16. August 1999 (1999-08-16), Seiten 249-256, XP004271893 ISSN: 0926-860X in der Anmeldung erwähnt

## Beschreibung

Die vorliegende Erfindung betrifft ein Verfahren zur Verringerung des N₂O-Gehalts in Gasen unter Einsatz spezieller Zeolith-Katalysatoren.

Bei vielen Prozessen, wie z.B. Verbrennungsprozessen oder auch bei der industriellen Herstellung von Salpetersäure, resultiert ein mit Stickstoffmonoxid NO, Stickstoffdioxid NO₂ (zusammen bezeichnet als NOₓ) sowie Lachgas N₂O beladenes Abgas. Während NO und NO₂ seit langem als Verbindungen mit ökotoxischer Relevanz bekannt sind (Saurer Regen, Smog-Bildung) und weltweit Grenzwerte für deren maximal zulässige Emissionen festgelegt sind, rückt in den letzten Jahren in zunehmenden Maße auch Lachgas in den Focus des Umweltschutzes, da dieses in nicht unerheblichem Maße zum Abbau von stratosphärischem Ozon und zum Treibhauseffekt beiträgt. Es besteht daher aus Gründen des Umweltschutzes ein dringender Bedarf an technischen Lösungen, die Lachgasemissionen zu beseitigen.

Im Unterschied zur NOₓ-Minderung in Abgasen, die seit vielen Jahren in der Technik etabliert ist, existieren zur N₂O-Beseitigung nur wenige technische Prozesse, die zumeist auf einen thermischen oder katalytischen Abbau des N₂O abzielen. Verfahren zur katalytischen Zersetzung von N₂O in N₂ und O₂ bieten dabei gegenüber katalytisch-reduktiven Verfahren den Vorteil, dass keine Betriebskosten für Reduktionsmittel aufgewendet werden müssen. Ebenfalls besonders vorteilhaft sind Verfahren, die bei einer möglichst niedrigen Temperatur arbeiten, da eine Aufheizung der Abgasströme im allgemeinen mit einem hohen Energieaufwand verbunden ist. Eine Übersicht über die Katalysatoren, deren prinzipielle Eignung zum Abbau von Lachgas nachgewiesen wurde, gibt Kapteijn et al. (F. Kapteijn, et al., Appl. Cat. B: Environmental 9 (1996) 25-64). Als besonders geeigenet erscheinen Zeolith-Katalysatoren.

US-A-5,171,553 beansprucht solche Zeolith-Katalysatoren, welche zumindest teilweise mit Metallen aus der Gruppe Kupfer, Kobalt, Rhodium, Iridium, Ruthenium oder Platin beladen sind. Nachteilig an diesen Katalysatoren ist jedoch ihr zum Teil hoher Preis sowie ihre ausgeprägte Neigung zur Desaktivierung in Gegenwart von NOₓ oder H₂O, welche oftmals zusammmen mit N₂O in zu behandelnden Abgasen oder Prozessgasen vorliegen.

Vielfach untersuchte Katalysatoren sind auch Fe-beladene Zeolith-Katalysatoren. So kann gemäß Rauscher et al. (Appl. Cat. A: 184 (1999) 249-256) durch Überleiten eines N₂O haltigen Gasstromes über einen Fe-ZSM-5-Katalysator (ein Fe-beladener Zeolith-Katalysator vom Typ MFI) ein 80%iger Abbau des N₂O bei 480°C herbeigeführt werden. Für viele Anwendungen, z.B. zur Beseitigung der N₂O-Emissionen bei der HNO₃-Produktion ist eine solche Betriebstemperatur jedoch nicht praktikabel.

Höhere Abbauraten über Fe-Zeolith-Katalysatoren können erreicht werden, wenn im zu behandelnden N₂O-haltigen Gas äquivalente Mengen an Stickstoffmonoxid (NO) enthalten sind, welches gemäß Kapteijn et al. (Studies in Surface Science and Catalysis, Vol.101 (1996) 641-650) als Reduktionsmittel für N₂O wirkt:

N₂O + NO → NO₂ + N₂

Allgemein bekannt ist auch, daß die sich die katalytische Aktivität von Zeolithen oftmals durch Dehydroxylierung, d.h. durch thermische Abspaltung von oberflächlich gebundenen Wasser, oder weitergehend durch Dealuminierung, d.h. ein Herauslösen des Gitteraluminiums des alumosilikatischen Zeolithgerüstes, beispielsweise durch Behandlung mit verdünnten Säuren oder mit Wasserdampf (Steamen), steigern läßt. Dies gilt insbesondere für die katalytische Umsetzung von Kohlenwasserstoffen, wie durch US-A-6, 165,439 oder WO-A-98/07513 bespielhaft belegt wird.

Im Bezug auf die katalytische Zersetzung von N₂O konnte durch Dehydroxylierung eines Zeoliths vom Typ H-ZSM-5 die Aktivität zur N₂O-Zersetzung gesteigert werden (Zholobenko et al. in "Proceedings of the 9^{th} International Zeolite Conference, Montreal 1992, 299-377), während die 95%ige Dealuminierung eines Zeolithen vom Typ MOR (Mordenit) zu einer starken Abnahme der Zersetzungsaktivität (Slinkin et al.; Kinet. Katal. (1978) 19(4), 922-927) führte. Im Falle von Co- und Cu- ausgetauschten Zeolithen vom Typ ZSM-5, welche einer Wasserdampfbehandlung unterzogen wurden, zeigte sich in Abhängigkeit vom Metall und dem eingestellten Austauschgrad ein sehr uneinheitliches Bild der N₂O-Zersetzungsaktivität (Montes de Correa et al.: Catal. let. 38 (1996) 27-32.

In J. of Catalysis, 195, 287-297 (2000) werden gesteamte isomorph substituierte Katalysatoren vom Typ Fe-ZSM-5 beschrieben. Diese weisen Eisengehalte von bis zu 0,61 Gew% auf und werden zur katalytischen Oxidation von Benzol zu Phenol eingesetzt. US-A-5,672,777 beschreibt den Einsatz von gesteamten Zeolith-Katalysatoren zur Synthese von Phenol aus Benzol oder Benzolderivaten in Gegenwart von Distickstoffoxid.

Koegel et al. beschreiben in Journ. of Catalysis, Bd. 182, 1999, S. 470-8 den Einsatz von mit Eisen beladenen Zeolith-Katelysatoren vom Typ MFI zur simultanen katalytischen Reduktion von NO und von N₂O unter Verwendung von Propan als Reduktionsmittel.

In EP-A-955,080 wird ein Verfahren zur Herstellung eines Katalysators für die Reduktion von N₂O und NOₓ in Abgasen beschrieben.

Aufgabe der vorliegenden Erfindung, ist die Bereitstellung eines wirtschaftlichen Verfahrens zur katalytischen Zersetzung von N₂O, welches sich durch eine hohe Zersetzungsaktivität der verwendeten Katalysatoren, d.h. durch hohe Abbauraten an N₂O bei niedrigen Temperaturen auszeichnet. Hohe Abbauraten sollen insbesondere auch bei gleichzeitiger Anwesenheit von NOₓ erreicht werden.

Dies wird erreicht durch die vorliegende Erfindung, welche ein Verfahren zur Verringerung des Gehaltes an N₂O in NOₓ-enthaltenden Gasen durch katalytische Zersetzung des N₂O in Stickstoff und Sauerstoff und durch Überleiten des N₂O- und NOₓ-haltigen Gases über einen Zeolith-Katalysator umfasst, der neben Gitteraluminium, das gegebenenfalls teilweise durch ein oder mehrere Elemente ausgewählt aus der Gruppe bestehend aus B, Be, Ga, Fe, Cr, V, As, Sb und Bi ersetzt ist, auch Nicht-Gitteraluminium und gegebenenfalls weitere Nichtgitteratome ausgewählt aus der Gruppe bestehend aus B, Be, Ga, Fe, Cr, V, As, Sb und Bi enthält, der ein molares Verhältnis von Nicht-Gitteraluminium zu Gitteraluminium im Bereich von 1:2 bis 20:1 aufweist, und der in der H-Form vorliegt und/oder ausgetauschtes Eisen enthält.

Als Zeolithe können dabei erfindungsgemäß insbesondere Zeolithe vom Typ MFI, BEA, FER oder MEL verwendet werden, besonders bevorzugt solche vom Typ MFI.

In dem erfindungsgemäßen Verfahren ist auch der Einsatz solcher Zeolithe eingeschlossen, in welchen das Gitteraluminium teilweise durch ein oder mehrere Elemente ausgewählt unter B, Be, Ga, Fe, Cr, V, As, Sb und Bi ersetzt ist Ebenso eingeschlossen ist der teilweise Ersatz von Zeolithen, bei denen das Gittersilicium durch ein oder mehrere Elemente ausgewählt unter Ge, Ti, Zr und Hf ersetzt ist. Diese Elemente können ebenso wie das Aluminium von Gitterpositionen auf Nichtgitterpositionen gelangt sein.

Die Erfindung umfasst neben dem Einsatz von Zeolith-Katalysatoren in der sogenannten H-Form auch den Einsatz von Zeolith-Katalysatoren, die infolge eines Ionentausches mit Eisen beladen sind.

Bei der H-Form der erfindungsgemäß eingesetzten Katalysatoren handelt es sich um dem Fachmann bekannte Formen, bei denen zumindest ein Teil der im Zeolithen vorliegenden Gegenionen Protonen sind. Die Herstellung von Zeolithen in der H-Form ist dem Fachmann bekannt. Nicht umfaßt sind solche Zeolithe, die nach ihrer hydrothermalen Synthese mit anderen Metallen als Eisen ausgetauscht worden sind.

Bevorzugt verwendet man Zeolith-Katalysatoren, die ein molares Verhältnis von Nicht-Gitter-zu Gitteraluminium im Bereich von 1:1 bis 15:1, besonders bevorzugt von 3:2 bis 10:1, aufweisen.

Besonders bevorzugt verwendet man Zeolith-Katalysatoren, die mit Eisen beladen worden sind. Diese sind besonders dann vorteilhaft, wenn das N₂O haltige Gas neben N₂O auch NOₓ enthält. Die Erfindung bezieht sich daher in besonderer Ausgestaltung auf Gase die außer N₂O auch NOₓ enthalten, insbesondere auf die Prozeßgase oder Abgase der Salpetersäureproduktion.

Die Temperatur beim Überleiten des N₂O haltigen Gases über die erfindungsgemäß einzusetzenden Zeolith-Katalysatoren beträgt üblicherweise 200 bis 600°C, vorzugsweise 250 bis 450°C.

Es wurde überraschend gefunden, daß alumosilkatische Zeolithe, die Gitteraluminium und Nicht-Gitteraluminium in einem molarer Verhältnis von Nicht-Gitter- zu Gitteraluminium größer 0,5 und kleiner 20, vorzugsweise kleiner 15, und die entweder in der H-Form vorliegen und/oder mit Eisen ausgetauscht worden sind, eine signifikant gesteigerte Aktivität zur Zersetzung von N₂O aufweisen.

Als Nicht-Gitteraluminium im Sinne der Erfindung sind dabei alle Al-Atome zu verstehen, die nicht in die alumosilikatische Gitterstruktur des Zeolithen eingebunden sind. Dabei ist es unerheblich ob dieses Aluminium außerhalb der silikatisch-tetraedrischen Sauerstoffmatrix als tetraedrisch, pentagonal oder oktaedrisch mit Sauerstoffatomen koordiniertes Aluminium vorliegt. Dem Fachmann ist diese Unterscheidung bekannt und er kennt Methoden zur analytischen Identifizierung und Quantifizierung der einzelnen Aluminiumspezies, beispielsweise mit Hilfe der IR-Spektroskopie (Diffuse Reflexion) oder der ²⁷Al-NMR-Spektroskopie. Auf letztere wird hiermit ausdrücklich bezug genommen. Eine Einführung in die Anwendung dieser Methoden zur Unterscheidung von Gitter und Nicht-Gitteraluminium ist gegeben in "Catalysis and Zeolites: Fundamentals and Applications / J. Weitkamp, I.Puppe (eds); Springer-Verlag Berlin Heidelberg 1990".

Im Sinne der Erfindung ebenfalls unerheblich ist, wie die Einstellung des erfindungsgemäßen Verhältnisses von Nicht-Gitter- zu Gitteraluminium bewirkt wurde. Dem Fachmann sind derartige Methoden bekannt, die beispielsweise in "Catalysis and Zeolites: Fundamentals and Applications / J. Weitkamp, I. Puppe (eds); Springer-Verlag Berlin Heidelberg 1990" unter dem Kapitel "Dealuminierung von Zeolithen" abgehandelt werden.

Die Behandlung der Zeolithe zur Erzeugung des erfindungsgemäß einzusetzenden Katalysators geht dabei üblicherweise über eine einfache Dehydroxylierung der Zeolithe, wie sie durch einfaches Tempern, beispielsweise bei Temperaturen von bis zu 800°C, bewirkt wird hinaus.

Besonders geeignet zur Einstellung des erfindungsgemäßen Verhältnisses von Nicht-Gitter-zu Gitteraluminium ist das sogenannte Steamen der Zeolithe, d.h. eine hydrothermale Behandlung der Zeolithe durch Überleiten von Wasserdampf bei erhöhten Temperaturen oder auch eine Behandlung mit verdünnten Säuren. Auch eine Kombination verschiedener Methoden ist anwendbar.

Bei einer Behandlung mit H₂O-Dampf findet, wie dem Fachmann bekannt ist, eine Dealuminierung bzw. falls der Zeolith neben Al noch andere Metalle wie z. B. Fe, Ga etc. enthält, eine Demetallierung statt, d. h. ein Austreiben des Aluminiums bzw. dieser Metalle aus dem Gittergerüst des Zeolithen. Das Aluminium bzw die Metalle wandern dabei von ihren Gitterpositionen in die Poren des Zeolithen und verbleiben dort als amorphe Bestandteile in oxidischer oder hydroxidischer Form als sogenanntes Extragittermetall. Der Grad der Dealuminierung bzw. Demetallierung kann über die Dauer der Wasserdampfbehandlung eingestellt werden.

Die Behandlung des Zeolithen mit Wasserdampf kann bspw. bei Temperaturen von 300-800 °C und über einen Zeitraum von 0,5-48 h erfolgen. Der Zeolith kann reinem Wasserdampf oder einem Gemisch aus Stickstoff und/oder Luft und Wasserdampf mit einem Wasserdampfanteil von 1-100 % bei Gesamtdrücken bis zu 100 bar ausgesetzt werden. Gegebenenfalls kann dem Wasserdampf bzw. dem Wasserdampfgemisch ein Trägergas zugesetzt werden. Geeignete Trägergase sind unter den Behandlungsbedingungen inert, Beispiele dafür sind N₂, Ar, He, H₂ oder ein Gemisch davon.

Die in dieser Weise mit Wasserdampf behandelten Zeolithe können gegebenenfalls durch eine zusätzliche Mineralsäurebehandlung weiter dealuminiert/demetalliert werden. Die Säurebehandlung kann sowohl Extragittermetall aus den Poren entfernen als auch zu einer weiteren Demetallierung des Gitters führen. Dieser Schritt kann z.B. in einem Batchreaktor bei Temperaturen von 0-120 °C bei einem Säure/Zeolith-Verhältnis von 1-100 cm³/g und bei Säurekonzentrationen von 0,001 M bis zur maximalen Konzentration der Säure durchgeführt werden. Beispiele für Säuren, die für diesen Schritt eingesetzt werden können, sind HCl, HF, H₂SO₄, HNO₃ und H₃PO₄. Nach der Säurebehandlung wird der Zeolith durch übliche Verfahren, zB. durch Filtration oder Zentrifugieren, vom Reaktionsgemisch abgetrennt.

Gemäss der vorliegenden Erfindung werden durch die vorstehend beschriebene Behandlung des Zeolithen amorphe Metalloxide bzw. -hydroxide an Extragitterstellen erzeugt, von denen angenommen wird, dass sie als katalytisch Zentren die Aktivität zur Zersetzung von N₂O steigern.

Der Strukturtyp der Zeolithe bleibt hierdurch im allgemeinen unberührt.

Genaue Angaben zum allgemeinen Aufbau und Struktur von Zeolithen werden im Atlas of Zeolite Structure Types, Elsevier, 4th revised Edition 1996, gegeben, auf den hiermit ausdrücklich Bezug genommen wird.

Zur Einstellung des erfindungsgemäßen molaren Verhältnis von Nicht-Gitter-zu Gitteraluminium bzw. zur Durchführung des erfindungsgemäßen Verfahrens können insbesondere Zeolithe vom Typ MFI, BEA, FER oder MEL verwendet werden, besonders bevorzugt solche vom Typ MFI. In dem erfindungsgemäßen Verfahren sind auch solche Zeolithe eingeschlossen, in welchen das Gitteraluminium teilweise durch ein oder mehrere Elemente ausgewählt unter B, Be, Ga, Fe, Cr, V, As, Sb und Bi ersetzt, d.h. isomorph substituiert ist. Ebenso eingeschlossen ist die isomorphe Substitution des Gittersilicium durch ein mehrere Elemente ausgewählt unter Ge, Ti, Zr und Hf.

Die Synthese bzw. Produktion Zeolithe kann nach Methoden die dem Fachman bekannt sind erfolgen: Viele der verwendbaren Ausgangs-Zeolithe können kommerziell bei entsprechenden Anbietem erworben werden.

Die Erfindung umfasst vorzugsweise den Einsatz solcher Zeolith-Katalysatoren, welche das oben beschriebene molare Verhältnis von Gitteraluminium und Nicht-Gitteraluminium aufweisen und welche im Zuge eines lonentausches mit Eisen beladen wurden.

Das Einstellen des erfindungsgemäß molaren Verhältnisses von Nichtgitter-Aluminium, zu Gitter-Aluminium, kann vor oder nach dem Austausch mit Eisen erfolgen bzw. nach einer Formgebung des Katalysators und in einer besonders bevorzugten Ausgestaltung der Erfindung im Anwendungsprozeß selbst.

Das Eisen wird dabei vorzugsweise durch einen Festkörper-lonenaustausch eingebracht. Üblicherweise geht man hierfür von den kommerziell erhältlichen Ammonium-Zeolithen (z.B. NH₄-ZSM-5) und den entsprechenden Eisensalzen (z.B. FeSO₄ x 7 H₂O) aus und mischt diese auf mechanischem Wege intensiv miteinander in einer Kugelmühle bei Raumtemperatur. (Turek et al.; Appl. Catal. 184, (1999) 249-256; EP-A-O 955 080). Auf diese Literaturstellen wird hiermit ausdrücklich Bezug genommen. Die erhaltenen Katalysatorpulver werden anschließend in einem Kammerofen an der Luft bei Temperaturen im Bereich von 400 bis 600 °C kalziniert. Nach dem Kalzinieren werden die eisenhaltigen Zeolithe in destilliertem Wasser intensiv gewaschen und nach Abfiltrieren des Zeolithen getrocknet. Der Eisengehalt kann bezogen auf die Masse an Zeolith bis zu 25% betragen, vorzugsweise jedoch 0,1 bis 10%.

Die durch Festkörper-lonenaustausch erhältlichen, mit Eisen beladenen Zeolith-Katalysatoren, welche das oben angegebene Verhältnis von Nichtgitter-Aluminium, zu Gitter-Aluminium, aufweisen, zeichnen sich durch eine besonders hohe katalytische Aktivität aus.

Erfindungsgemäß bevorzugt eingesetzt werden Zeolith-Katalysatoren, die neben den oben angegebenen Gitter-Metallen, insbesondere Gitter-Aluminium auch die oben angegebenen Nicht-Gittermetalle, insbesondere Nichtgitter-Aluminium enthalten, die ein molares Verhältnis von Nicht-Gitteraluminium zu Gitter-Aluminium, im Bereich von 1:2 bis 20:1 aufweisen, und die durch Festkörperionenaustausch mit Eisen beladen wurden.

Weiter erfindungsgemäß bevorzugt eingesetzt werden Zeolith-Katalysatoren, die neben Gitter-Aluminium, das gegebenenfalls teilweise durch ein oder mehrere Elemente ausgewählt aus der Gruppe bestehend aus B, Be, Ga, Fe, Cr, V, As, Sb und Bi ersetzt ist, auch Nicht-Gitteraluminium und gegebenenfalls weitere Nichtgitter-atome ausgewählt aus der Gruppe bestehend aus B, Be, Ga, Fe, Cr, V, As, Sb und Bi enthalten, die ein molares Verhältnis von Nicht-Gitteraluminium zu Gitteraluminium im Bereich von 1:2 bis 20:1 aufweisen, und die mindestens 1 Gew.°%, vorzugsweise 2 bis 15 Gew.%, insbesondere 3 bis 10 Gew.% Eisen (berechnet als Fe₂O₃ und bezogen auf die Masse des Zeolithen) enthalten.

Besonders bevorzugt eingesetzt werden Zeolith-Katalysatoren, die erhältlich sind durch
a) Herstellung einer trockenen Mischung aus Komponente 1 enthaltend Ammoniumsalze, NH₃/ NH₄-Zeolithe oder N-haltige Verbindungen, aus Komponente 2 enthaltend hochsilikatische Zeolithstrukturen mit einem Si/Al-Verhältnis von mehr als 5, und aus Komponente 3 enthaltend eine Eisenverbindung,
b) Temperung dieser Mischung bei Temperaturen oberhalb von 300°C, bis der Eisen-lonenaustausch vollständig erfolgt ist, und
c) Dealuminierung des erhaltenen Eisen-ausgetauschten ZeolithKatalysators in an sich bekannter Weise, vorzugsweise durch Behandlung mit Wasserdampf, um ein molares Verhältnis von Nicht-Gitter- zu Gitteraluminium im Bereich von 1:2 bis 20:1 einzustellen.

Die erhaltenen Zeolithe können ggf. mit einem Bindemittel oder einem Peptisierungshilfsmittel bzw. Verstrangungshilfsmittel zu einer geeigneten Gestalt, z.B. einem Strang oder einer Tablette, geformt werden. So können sie wahlweise als 2- bis 4-mm-Stränge, als Tabletten mit 3 bis 5 mm Durchmesser, als Splitt mit Teilchengrößen von 1,0 bis 1,6 mm oder pulverförmig eingesetzt werden.

Als Bindemittel eignen sich u.a. diverse Aluminiumoxide, bevorzugt Boehmit, amorphe Aluminosilikate mit einem SiO₂/Al₂O₃-Verhältnis von 25:75 bis 90:5, bevorzugt 75:25, Siliciumdioxid, bevorzugt hochdisperses SiO₂, Gemische aus hochdispersam SiO₂ und hochdispersem Al₂O₃, TiO₂, ZrO₂ sowie Ton. Das Bindemittel wird üblicherweise in einem Verhältnis Zeolith zu Bindemittel von 95:5 bis 40:60 Gew.% eingesetzt.

Beispiele für Verstrangungs- oder Peptisierungshilfsmittel sind Methylcellulose, Ethylcellulose, Stearinsäure, Kartoffelstärke, Ameisensäure, Essigsäure, Oxalsaure und Graphit. Die zugesetzte Menge dieser Hilfsmittel liegt üblicherweise in einem Bereich zwischen 0,1 bis 10 Gaw.-%.

Nach der Verformung werden die Extrudate oder Presslinge üblicherweise bei 100-150 °C für 1-24 h getrocknet. Anschließend folgt üblicherweise eine Calcinierung bei einer Temperatur von 400 bis 650 °C einen Zeitraum von 0,25 bis 24 h. Vorteilhafte Katalysatoren können auch erhalten werden, wenn die isolierten Zeolithe direkt nach der Trocknung geformt und erst nach der Formung einer Calcinierung unterworfen werden.

Die Temperatur beim Überleiten des N₂O haltigen Gases beträgt üblicherweise zwischen 200 und 600°C, vorzugsweise zwischen 250 und 450°C. Das mit Stickstoffoxiden beladene Gas wird üblicherweise mit einer Raumgeschwindigkeit von 200 bis 200.000 h⁻¹, vorzugsweise 5.000 bis 100.000 h⁻¹ bezogen auf das Katalysatorvolumen, über den Katalysator geleitet. Die Wahl der Betriebstemperatur ist dabei ebenso wie gewählte Raumgeschwindigkeit bestimmt durch den gewünschten Abbaugrad an N₂O. Das erfindungsgemäße Verfahren wird im allgemeinen bei einem Druck im Bereich von 1 bis 50 bar, vorzugsweise 1 bis 25 bar durchgeführt. Der Wassergehalt des Reaktionsgases liegt vorzugsweise im Bereich von <25 Vol.%, insbesondere im Bereich <15 Vol.%. Im allgemeinen wird eine relativ niedrige Wasserkonzentration bevorzugt, da höhere Wassergehalte höhere Betriebstemperaturen erforderlich machen würden. Ebenso arbeitet das erfindungsgemäße Verfahren auch in Gegenwart von O₂.

Bei Verwendung eisenhaltiger Katalysatoren hat sich die gleichzeitige Anwesenheit von NOₓ im zu behandelnden Gas als besonders vorteilhaft erwiesen. Es wurde überraschenderweise gefunden, daß in Gegenwart der gemäß der Erfindung verwendeten eisenhaltigen Zeolith-Katalysatoren der N₂O-Abbau auch in Anwesenheit geringer Mengen an NOₓ, d.h. bei einem molaren NOₓ/N₂O-Verhältnis < 0,5 drastisch erhöht wird. Ein Effekt, der sich mit zunehmender Temperatur deutlich verstärkt.

Dies ist umso erstaunlicher, als im Stand der Technik der beschleunigte N₂O-Abbau auf die bereits erwähnte stöchiometrische Umsetzung von N₂O mit NO zurückgeführt wird. NOₓ scheint bei hinreichender Temperatur und kleinem NOₓ/N₂O-Verhältnis die Rolle eines homogenen Cokatalysators zu übemehmen, welcher den N₂O Abbau gemäß N₂O → N₂ + 1/2 O₂ beschleunigt.

Das erfindungsgemäße Verfahren betrifft daher die Beseitigung von N₂O aus NOₓ haltigen Gasen.

Insbesondere betrifft es die Behandlung von Prozeßgasen und Abgasen der HNO₃-Produktion sowie die Behandlung von Kraftwerksabgasen und von Abgasen von Gasturbinen, in denen üblicherweise sowohl N₂O als auch NOₓ enthalten ist.

In einer weiteren Form der Ausgestaltung umfasst die Erfindung die hydrothermale Behandlung der Katalysatoren zur Erzeugung des erfindungsgemäßen Verhältnisses von Nicht-Gitteraluminium zu Gitter-Aluminium, als intermediären Prozessschritt der Beseitigung von N₂O, insbesondere dann wenn im Verlauf des Betriebs des Katalysators eine Abnahme der Zersetzungsaktivität beobachtet wird. So kann der erfindungsgemäße Katalysator beispielsweise zur Wiederherstellung seiner erfindungsgemäßen Eigenschaften im Prozeß mit Wasserdampf behandelt werden, so daß eine Regenerierung desselben bewirkt wird.

Gemäss einer besonderen Ausführungsform kann ein verkokter, desaktivierter Zeolith-Katalysator zur Regenerierung mit Sauerstoff oder N₂O oder einem Gemisch davon mit oder ohne Stickstoff bei einer Temperatur von 400-650 °C, bevorzugt von 450-550 °C über einen Zeitraum von 0.25-24 h behandelt werden. Das dabei gebildete Wasser kann ebenfalls zu einer Demetallierung bzw- Dealuminierung führen.

Die Zersetzung von N₂O sowie die Einstellung des erfindungsgemäßen Verhältnisses von Nicht-Gitteraluminium zu Gitter-Aluminium, und Regenerierung des Katalysators können für die vorliegende Erfindung in einem üblichen, für die heterogene Katalyse geeigneten Reaktor durchgeführt werden, wie z B. in einem Festbett oder einer Wirbelschicht. Als Festbettreaktoren können z. B. Schlaufenreaktoren, Hordenreaktoren und insbesondere Rohrreaktoren zum Einsatz kommen.

Der Wirbelschichtreaktor, auch Fließbettreaktor genannt, hat einen Reaktionsraum, in dem eine körnige Feststoff-Schüttung durch ein von unten durchströmendes Gas aufgelockert und in diesem Schwebezustand gehalten wird. Diese stark aufgelockerte, gasdurchlässige Schicht wird Wirbelschicht genannt. Sie hat ein ähnliches Verhalten wie eine siedende Flüssigkeit mit starker Durchmischung. Wirbelgut, hier der Katalysator, in extrudierter Form mit mittleren Durchmessern von 80 bis 250 µm hat sich hierbei als besonders günstig erwiesen.

### Beispiele

Die folgenden Beispiele veranschaulichen die Erfindung ohne diese darauf zu beschränken. In den Beispielen erfolgte die Wasserdampfbehandlung der eingesetzten Zeolithe in denselben Apparaturen wie sie für die katalytische Umsetzung genutzt wurden. Statt N₂O wurde Stickstoff oder Luft verwendet, das zuvor in einem Sättiger mit Wasser gesättigt worden war.

Die Beispiele 1-19 sind nicht erfindungsgemäß. Die Beispiele 20-22 sind Vergleichsbeispiele. Beispiel 23 ist ein Erfindungsbeispiel.

### Beispiele 1-19

Für die Durchführung der nachfolgend beschriebenen katalytischen Untersuchungen der Beispiele 1-19 wurde ein Rohrreaktor mit einem Innendurchmesser von 6 mm im Festbett eingesetzt, wobei das Rohr in einem Ofen eingebaut war. Die Reaktionszone lag in dem Ofen, der eine gleichmäßige Temperatur über die gesamte Reaktionsstrecke vorgab. Am Ende der Reaktionszone verhinderte ein Maschendraht das Austragen der Katalysatorkörner (Katalysatorstuhl). Als Katalysatoren kamen hierbei tablettierte oder extrudierte Formkörper zum Einsatz, deren mittlere Korngrößen zwischen 0,5 und 5 mm lag.
Das austretende Gas wurde in einem Luftsack gesammelt und gaschromatographisch analysiert.

### Beschreibung der eingesetzten Katalysatoren

### Katalysator A

Der H-ZSM-5 Zeolith Zeocat PZ-2/50 H, Batch PZ-2/23 H (SiO₂/Al₂O₃ = 60; 0,083 Gew.-% Fe₂O₃) von Fa. Uetikon wurde mit Methylcellulose als Peptisierungsmittel und Wasser im Verhältnis 100:7:100 vermischt und zu Strängen von 2 mm Durchmesser extrudiert. Nach dem Trocknen bei 110 °C/12 h und anschließender Calcinierung bei 550 °C/5 h unter Luft wurde der Katalysator zu Körnern mit 1-1,6 mm Durchmessern zerkleinert.

### Katalysator B

Der H-ZSM-5 Zeolith KAZ 92/005H-F, M.-Nr. KM769 (SiO₂/Al/O₃ = 28; 0,051 Gew.-% Fe₂O₃) von Fa. Degussa AG wurde mit Methylcellulose als Peptisierungsmittel und Wasser im Verhältnis 100:7:100 vermischt und zu Strängen von 2 mm Durchmesser extrudiert. Nach dem Trocknen bei 110 °C/12 h und anschließender Calcinierung bei 550 °C/5 h unter Luft wurde der Katalysator zu Körnern mit 1-1,6 mm Durchmessern zerkleinert.

### Katalysator C

Der H-ZSM5 Zeolith M28, KM906 (SiO₂/Al₂O₃ = 28; 0,03 Gew.-% Fe₂O₃) von Fa. Degussa AG wurde mit Methylcellulose als Peptisierungsmittel und Wasser im Verhältnis 100:7:100 vermischt und zu Strängen von 2 mm Durchmesser extrudiert. Nach dem Trocknen bei 110 *°*C/12 h und anschließender Calcinierung bei 550 °C/5 h unter Luft wurde der Katalysator zu Körnern mit 1-1,6 mm Durchmessern zerkleinert.

### Katalysator D

Der H-ZSM5 Zeolith Zeocat PZ-2/54 H, Batch PZ-2/23 (SiO₂/Al₂O₃ = 60; 0,045 Gew.-% Fe₂O₃) von Fa. Uetikon wurde mit Methylcellulose als Peptisierungsmittel und Wasser im Verhältnis 100:7:100 vermischt und zu Strängen von 2 mm Durchmesser extrudiert. Nach dem Trocknen bei 110°C/12 h und anschließender Calcinierung bei 550 °C/5 h unter Luft wurde der Katalysator zu Körnern mit 1-1,6 mm Durchmessern zerkleinert.

### Beispiele 1-6

Die Wasserdampfbehandlung wurde in dem vorbeschriebenen Rohrreaktor (Innendurchmesser 6 mm) mit 3 g des gekörnten Katalysators A durchgeführt. Der Katalysator wurde zunächst bei einer Temperatur von 150 °C unter Atmosphärendruck 1 h im Stickstoffstrom von 16 l/h getrocknet und anschließend bei einer Aufheizrate von 10 °C/Minute erhitzt. Nach Erreichen der Temperatur wurde der Stickstoff durch einen Sättiger geleitet, in dem Wasser auf 70 °C temperiert war. Hierdurch wurde ein Wasserdampfpartialdruck von 310 mbar eingestellt. Über die Dauer der Wasserdampfbehandlung wurde der Grad der Dealuminierung/Demetallierung variiert.

Nach abgeschlossener Wasserdampfbehandlung wurden dem auf Raumtemperatur abgekühlten Katalysator 1 g zu Analysezwecken entnommen. Die verbliebenen 2g Katalysator wurden im Rohrreaktor bei 350 °C über Nacht mit N₂O, N₂ oder Luft getrocknet.

Die Zersetzung von N₂O erfolgte dann bei einer Reaktionstemperatur von 350 °C. Die Festbettlänge betrug ca. 15-20 cm. Der N₂O-Volumenstrom betrug 1 NI/h. Die Proben wurden nach 0,25 h Reaktionsdauer gezogen.

Die Ergebnisse sind in Tabelle 1 aufgeführt.

**Tabelle 1**

| Beispiel | Dauer der Calcinierung [h] | Dauer der Wasserdampfbehandlung [h] | Verhältnis von Nicht-Gitter / Gitter-Aluminum | Umsatz [%] |
|---|---|---|---|---|
| 1 | 5 | 0 | 0,4 | 15,6 |
| 2 | 5 | 1 | - | 23,2 |
| 3 | 5 | 2 | - | 31,6 |
| 4 | 5 | 3 | 1,7 | 37,2 |
| 5 | 5 | 5 | - | 39,6 |
| 6 | 5 | 7 | 2,0 | 41,1 |

### Beispiele 7-11

Mit Katalysator B wurde wie in Beispielen 1-6 verfahren:

**Tabelle 2**

| Beispiel | Dauer der Calcinierung [h] | Dauer der Wasserdampfbehandlung [h] | Umsatz [%] |
|---|---|---|---|
| 7 | 5 | 0 | 26,0 |
| 8 | 5 | 1 | 48, 7 |
| 9 | 5 | 3 | 62,2 |
| 14 | 5 | 7 | 74,5 |
| 11 | 5 | 13 | 89,6 |

### Beispiele 12-14

Mit Katalysator C wurde wie in Beispielen 1-6 verfahren:

**Tabelle 3**

| Beispiel | Dauer der Calcinierung [h] | Dauer der Wasserdampfbehandlung [h] | Verhältnis von Nicht-Gitter / Gitter-Aluminum | Umsatz [%] |
|---|---|---|---|---|
| 12 | 5 | 0 | 0,3 | 35,4 |
| 13 | 5 | 3 | 1.9 | 63,0 |
| 14 | 5 | 4 | 2,1 | 85,2 |

### Beispiele 15 und 16

Mit Katalysator D wurde wie in Beispielen 1-6 verfahren:

**Tabelle 4**

| Beispiel | Dauer der Calcinierung [h] | Dauer der Wasserdampfbehandlung [h] | Umsatz [%] |
|---|---|---|---|
| 15 | 5 | 0 | 57,0 |
| 16 | 5 | 3 | > 99 |

### Beispiel 17

Mit Katalysator A wurde wie in Beispielen 1-6 verfahren. Es erfolgte jedoch keine Wasserdampfbehandlung sondern lediglich eine weitere Calcinierung in Stickstoff bei einer Temperatur von 550 °C.

**Tabelle 5**

| Beispiel | Dauer der Calcinierung [h] | Dauer der Wasserdampfbehandlung [h] | Umsatz [%] |
|---|---|---|---|
| 1 | 5 | 0 | 15,6 |
| 17 | 5 + 15 | 0 | 14,3 |

### Beispiel 18 und 19

Mit Katalysator B wurde wie in Beispielen 1-6 verfahren. Es erfolgte jedoch keine Wasserdampfbehandlung sondem lediglich eine weitere Calcinierung bei einer Temperatur von 550 °C.

**Tabelle 6**

| Beispiel | Dauer der Calcinierung [h] | Dauer der Wasserdampfbehandlung [h] | Umsatz [%] |
|---|---|---|---|
| 7 | 5 | 0 | 26,0 |
| 18 | 5 + 15 (in Luft) | O | 14,3 |
| 19 | 5 + 12 (in Stickstoff) | 0 | 20,3 |

Die Ergebnisse der Beispiele 1-16 zeigen eindeutig, dass durch die hydrothermale Behandlung der Katalysatoren A-D unter Einstellung des erfindungsgemäßen Verhältnisses von Nicht-Gitter- zu Gitteralumium die Aktivität zur Zersetzung von N₂O deutlich gesteigert wird. Die Zunahme der Aktivität korreliert dabei mit einem steigenden Verhältnis von Nicht-Gitter- zu Gitteralumium- Darüber hinaus belegen die Beispiele 17-19 dass bei bloßer Calcinierbehandlung (zusätzlich zur Calcinierung bei der Herstellung der Zeolith-Katalysatoren) der Umsatz an N₂O nicht erhöht wird. Das Einstellen des ertndungsgemäßen Verhältnisses von Nicht-Gitter- zu Gitteralumium ist Voraussetzung zum Erreichen der erfindungsgemäß hohen Zersetzungsaktivität der Katalysatoren.

### Beispiele 20-23

### Katalysator E

Als Katalysator wird ein mit Eisen beladener Zeolith vom Typ ZSM-5 eingesetzt.

Die Herstellung des Fe-ZSM-5-Katalysators erfolgte durch Festkörperlonentausch ausgehend von einem kommerziell verfügbaren Zeolith in Ammonium-Form (ALSI-PENTA, SM27). Detaillierte Angaben zur Präparation können entnommen werden aus: M. Rauscher, K Kesore, R. Mönnig, W. Schwieger, A. Tißler, T. Turek: Preparation of highly active Fe-ZSM-5 catalyst through solid state ion exchange for the catalytic decomposition of N2O", in Appl. Catal. 184 (1999) 249-256.

Die Katalysatorpulver wurden an der Luft für 6h bei 823K kalziniert, gewaschen und über Nacht bei 383K getrocknet. Nach Zusatz entsprechender Binder folgte die Extrusion zu zylindrischen Katalysatorkörpern, welche zu einem Granulat mit einer Korngröße von 1-2 mm gebrochen wurden. Der Eisengehalt des Katalysators betrug 7,5 Gew.%, berechnet als Fe₂O₃ und bezogen auf die Masse des Zeolithen.

Als Vorrichtung zur Minderung des N₂O-Gehaltes kam in den Beispielen 20-23 ein Rohrreaktor mit einem Innendurchmesser von 20 mm zum Einsatz, welcher mit einer solchen Menge an obigem Katalysator befüllt war, dass bezogen auf den eintretenden Gasstrom ein Raumgeschwindigkeit von 10.000 h⁻¹ resultierte. Die Betriebstemperatur des Reaktors wurde durch Beheizung auf 350°C eingestellt Die Analyse des in die Vorrichtung ein- und austretenden Gasstroms erfolgte mit Hilfe eines FTIR-Gasanalysators.

Die hydrothermale Behandlung des Katalysators E erfolgte ebenfalls in obigem Rohrreaktor durch Überleiten eines Stickstoffstromes mit 20%vol Wasser bei 450°C.

### Beispiele 20 und 21

Die Zusammensetzung des zu behandelnden Gasgemisches der Beispiele 20 und 21 betrug: 1000 ppm N₂O; 2,5 %vol O₂ in N₂.

Folgende Ergebnisse des N₂O-Abbaus wurden erhalten (Tabelle 7):

**Tabelle 7**

| Beispiel | Dauer der Wasserdampfbehandlung [h] | Umsatz [%] |
|---|---|---|
| 20 | 0 | 4 |
| 21 | 5 | 40 |

### Beispiele 22 und 23

Die Zusammensetzung des zu behandelnden Gasgemisches der Beispiele 22 und 23 betrug: 1000 ppm N₂O; 1000 ppm NO, 2,5 %vol O₂ in N₂.

Folgende Ergebnisse des N₂O-Abbau wurden erhalten (Tabelle 8):

**Tabelle 8**

| Beispiel | Dauer der Wasserdampfbehandlung [h] | Umsatz [%] |
|---|---|---|
| 22 | 0 | 50 |
| 23 | 5 | 98 |

Die Beispiele 20 und 21 belegen, wie die hohe Aktivität der eingesetzten Fe-ZSM-5-Katalysatoren durch Steamen noch einmal deutlich gesteigert werden kann.

Dieser Effekt verstärkte sich noch einmal bei gleichzeitiger Anwesenheit von NOₓ im Abgas, wie in den Beispielen 22 und 23 gezeigt ist.

## Patentansprüche

1. Verfahren zur Verringerung des Gehaltes an N₂O in NOₓ-enthaltenden Gasen durch katalytische Zersetzung des N₂O in Stickstoff und Sauerstoff, worin das N₂O- und NOₓ-haltige Gas über einen Zeolith-Katalysator geleitet wird, der neben Gitteraluminium, das gegebenenfalls teilweise durch ein oder mehrere Elemente ausgewählt aus der Gruppe bestehend aus B, Be, Ga, Fe, Cr, V, As, Sb und Bi ersetzt ist, auch Nicht-Gitteraluminium und gegebenenfalls weitere Nichtgitteratome ausgewählt aus der Gruppe bestehend aus B, Be, Ga, Fe, Cr, V, As, Sb und Bi enthält, und ein molares Verhältnis von Nicht-Gitteraluminium zu Gitteraluminium im Bereich von 1:2 bis 20:1 aufweist, und der in der H-Form vorliegt und/oder ausgetauschtes Eisen enthält.

2. Verfahren nach Anspruch 1, **dadurch gekennzeichnet dass** der oder die verwendeten Zeolith-Katalysatoren vom Typ MFI, BEA, FER oder MEL sind, insbesondere vom Typ MFI sind.

3. Verfahren nach Anspruch 1, **dadurch gekennzeichnet dass** der oder die verwendeten Zeolith-Katalysatoren die ein molares Verhältnis von Nicht-Gitter- zu Gitteraluminium im Bereich von 1:1 bis 15:1 aufweisen.

4. Verfahren nach Anspruch 1, **dadurch gekennzeichnet, dass** in den verwendeten Zeolith-Katalysatoren das Gitteraluminium teilweise durch ein oder mehrere Elemente ausgewählt unter B, Be, Ga, Fe, Cr, V, As, Sb und Bi ersetzt ist

5. Verfahren nach Anspruch 1, **dadurch gekennzeichnet, dass** in den verwendeten Zeolith-Katalysatoren das Gittersilicium teilweise durch ein oder mehrere Elemente ausgewählt unter Ge, Ti, Zr und Hf ersetzt ist.

6. Verfahren nach Anspruch 1, **dadurch gekennzeichnet, dass** der verwendete Zeolith-Katalysator durch lonentausch mit Eisen beladen ist.

7. Verfahren nach Anspruch 1, **dadurch gekennzeichnet dass** das molare Verhältnis von NOₓ / N₂O weniger als 0.5 beträgt.

8. Verfahren nach Anspruch 1, **dadurch gekennzeichnet, dass** der eingesetzte Zeolith-Katalysator in einem intermediären Prozessschritt hydrothermal behandelt wird, um das Verhältnis von Nicht-Gitteraluminium zu Gitteraluminium nach Anspruch 1 herzustellen.

9. Verfahren nach Anspruch 1, **dadurch gekennzeichnet, dass** das N₂O-haltige Gas ein Prozeßgas oder Abgas der Salpetersäureproduktion ist.

10. Verfahren nach Anspruch 1, **dadurch gekennzeichnet, dass** das N₂O-haltige Gas ein Abgas aus dem Betrieb einer Gasturbine ist.

11. Verfahren nach Anspruch 1, **dadurch gekennzeichnet, dass** das N₂O-haltige Gas ein Abgas aus dem Betrieb eines Kraftwerks ist.

12. Verfahren nach Anspruch 1, **dadurch gekennzeichnet, daß** die Temperatur beim Überleiten des N₂O-haltigen Gases über einen eisenhaltigen Zeolith-Katalysator 200 bis 600°C beträgt, vorzugsweise 250 bis 450°C.

13. Verfahren nach Anspruch 1, **dadurch gekennzeichnet, daß** dem N₂O und NOₓ enthaltenden Gas ein Reduktionsmittel zur katalytischen Reduktion von NOₓ zugegeben wird.

## Claims

1. Method of reducing the content of N₂O in NOₓ₋containing gases by catalytic decomposition of the N₂O into nitrogen and oxygen, in which the N₂O- and NOₓ₋containing gas is passed over a zeolite catalyst which comprises lattice aluminium (which may be partly replaced by one or more elements selected from the group consisting of B, Be, Ga, Fe, Cr, V, As, Sb and Bi) together with nonlattice aluminium and, if desired, further nonlattice atoms selected from the group consisting of B, Be, Ga, Fe, Cr, V, As, Sb and Bi, has a molar ratio of nonlattice aluminium to lattice aluminium in the range from 1:2 to 20:1 and is present in the H form and/or contains exchanged iron.

2. Method according to Claim 1, **characterized in that** the zeolite catalyst or catalysts used are of the MFI, BEA, FER or MEL type, in particular of the MFI type.

3. Method according to Claim 1, **characterized in that** the zeolite catalyst or catalysts used have a molar ratio of nonlattice aluminium to lattice aluminium in the range from 1:1 to 15:1.

4. Method according to Claim 1, **characterized in that** the lattice aluminium in the zeolite catalysts used has been partly replaced by one or more elements selected from among B, Be, Ga, Fe, Cr, V, As, Sb and Bi.

5. Method according to Claim 1, **characterized in that** the lattice silicon in the zeolite catalysts used has been partly replaced by one or more elements selected from among Ge, Ti, Zr and Hf.

6. Method according to Claim 1, **characterized in that** the zeolite catalyst used has been laden with iron by iron exchange.

7. Method according to Claim 1, **characterized in that** the molar ratio of NOₓ/N₂O is less than 0.5.

8. Method according to Claim 1, **characterized in that** the zeolite catalyst used is treated hydrothermally in an intermediate process step to produce the ratio of nonlattice aluminium to lattice aluminium according to Claim 1.

9. Method according to Claim 1, **characterized in that** the N₂O-containing gas is a process gas or offgas from nitric acid production.

10. Method according to Claim 1, **characterized in that** the N₂O-containing gas is an offgas from operation of a gas turbine.

11. Method according to Claim 1, **characterized in that** the N₂O-containing gas is an offgas from operation of a power station.

12. Method according to Claim 1, **characterized in that** the temperature at which the N₂O-containing gas is passed over an iron-containing zeolite catalyst is from 200 to 600°C, preferably from 250 to 450°C.

13. Method according to Claim 1, **characterized in that** a reducing agent for the catalytic reduction of NOₓ is added to the N₂O- and NOₓ-containing gas.

## Revendications

1. Procédé de réduction de la teneur en N₂O dans des gaz contenant des NOₓ par décomposition catalytique du N₂O en azote et en oxygène, dans lequel le gaz contenant du N₂O et des NOₓ est passé sur un catalyseur de zéolithe, qui contient, hormis l'aluminium du réseau, qui est le cas échéant partiellement remplacé par un ou plusieurs éléments choisis dans le groupe constitué de B, Be, Ga, Fe, Cr, V, As, Sb et Bi, aussi de l'aluminium ne faisant pas partie du réseau et, le cas échéant, d'autres atomes ne faisant pas partie du réseau, choisis dans le groupe constitué de B, Be, Ga, Fe, Cr, V, As, Sb et Bi, et qui présente un rapport molaire entre l'aluminium ne faisant pas partie du réseau et l'aluminium du réseau allant de 1/2 à 20/1 et qui se présente sous la forme H et/ou contient du fer échangé.

2. Procédé selon la revendication 1, **caractérisé en ce que** le ou les catalyseurs de zéolithe utilisés sont du type MFI, BEA, FER ou MEL, en particulier du type MFI.

3. Procédé selon la revendication 1, **caractérisé en ce que** le ou les catalyseurs de zéolithe utilisés présentent un rapport molaire entre l'aluminium ne faisant pas partie du réseau et l'aluminium du réseau allant de 1/1 à 15/1.

4. Procédé selon la revendication 1, **caractérisé en ce que**, dans les catalyseurs de zéolithe utilisés, l'aluminium du réseau est partiellement remplacé par un ou plusieurs éléments choisis parmi B, Be, Ga, Fe, Cr, V, As, Sb et Bi.

5. Procédé selon la revendication 1, **caractérisé en ce que**, dans les catalyseurs de zéolithe utilisés, le silicium du réseau est partiellement remplacé par un ou plusieurs éléments choisis parmi Ge, Ti, Zr et Hf.

6. Procédé selon la revendication 1, **caractérisé en ce que** le catalyseur de zéolithe utilisé est chargé avec du fer par échange ionique.

7. Procédé selon la revendication 1, **caractérisé en ce que** le rapport molaire de NOₓ/N₂O est inférieur à 0,5.

8. Procédé selon la revendication 1, **caractérisé en ce que** le catalyseur de zéolithe mis en oeuvre est traité par hydrothermie dans une étape de procédé intermédiaire pour obtenir le rapport entre l'aluminium ne faisant pas partie du réseau et l'aluminium du réseau selon la revendication 1.

9. Procédé selon la revendication 1, **caractérisé en ce que** le gaz contenant du N₂O est un gaz de procédé ou un gaz d'échappement de la production d'acide nitrique.

10. Procédé selon la revendication 1, **caractérisé en ce que** le gaz contenant du N₂O est un gaz d'échappement provenant de l'exploitation d'une turbine à gaz.

11. Procédé selon la revendication 1, **caractérisé en ce que** le gaz contenant du N₂O est un gaz d'échappement provenant de l'exploitation d'une centrale thermique.

12. Procédé selon la revendication 1, **caractérisé en ce que** la température au cours du passage du gaz contenant du N₂O sur un catalyseur de zéolithe contenant du fer atteint 200 à 600°C, de préférence 250 à 450°C.

13. Procédé selon la revendication 1, **caractérisé en ce que** le gaz contenant du N₂O et des NOₓ est additionné d'un agent réducteur pour la réduction catalytique des NOₓ.
